# EUROPEAN PATENT SPECIFICATION

(11) **EP 4 234 272 B1**
(45) Date of publication and mention of the grant of the patent: **04.02.2026**
(21) Application number: 23171618.4
(22) Date of filing: 15.12.2020
(51) Int. Cl.: B60C 9/00, B60C 9/28, B60C 9/20, B60C 9/22

(54) **PNEUMATIC TIRE**
LUFTREIFEN
PNEUMATIQUE

(30) Priority: 17.12.2019 US 201962949074 P; 09.10.2020 US 202017066653
(43) Date of publication of application: 30.08.2023
(62) Divisional of application: 20214117.2
(73) Proprietor: The Goodyear Tire & Rubber Company, Akron, OH 44316 (US)
(72) Inventor: COCCON, Marco Nicolo, L-2230 Luxembourg (LU); PASSANTE SPACCAPIETRA, Ettore, L-9070 Ettelbruck (LU); MANOGARAN, Arun Prasath, L-8715 Everlange (LU); MULLER, Philippe Joseph Auguste, B-6971 Champion (BE)
(74) Representative: Kutsch, Bernd

(56) References cited:
- EP-A1- 3 030 431
- EP-A2- 1 886 843
- EP-B1- 1 698 493
- EP-B1- 2 632 742
- CN-A- 108 422 810
- CN-A- 108 638 756
- JP-A- 2000 085 311
- JP-A- 2014 015 056
- US-A1- 2013 048 185

## Description

### Field of the Invention

This invention relates to a pneumatic tire having a carcass and a belt reinforcing structure, and, more particularly, to radial ply tires for use in aircraft, trucks and other high load applications.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

EP 3 030 431 A1 describes a tire in accordance with the preamble of claim 1. JP 2014 015056 A discloses a similar construction.

### Summary of the Invention

The invention relates to a tire in accordance with claim 1.

Dependent claims refer to preferred embodiments of the invention.

According to a first preferred aspect a pneumatic tire comprises a tread, a carcass and a belt structure interposed between the carcass and the tread. The belt structure includes a first and second working belt, wherein a low angle belt is positioned between the first and second working belts, and wherein the low angle belt has an angle less than 10 degrees. The second working belt is located radially outward of the first working belt and the low angle belt and has a first lateral end and a second lateral end. A first lateral belt is located adjacent the first lateral end of the second working belt, and a second lateral belt is located adjacent the second lateral end of the second working belt.

### Definitions

"Aspect ratio" of the tire means the ratio of its section height (SH) to its section width (SW) multiplied by 100% for expression as a percentage.

"Axial" and "axially" mean lines or directions that are parallel to the axis of rotation of the tire.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands which the plies in the tire comprise.

"Extensible" means a cable having a relative elongation at break of greater than 0.2% at 10% of the breaking load, when measured from a cord extracted from a cured tire.

"Equatorial plane (EP)" means the plane perpendicular to the tire's axis of rotation and passing through the center of its tread.

"Net-to-gross ratio" means the ratio of the tire tread rubber that makes contact with the road surface while in the footprint, divided by the area of the tread in the footprint, including non-contacting portions such as grooves.

"Winding" means the pattern of the strip formed in a first revolution of the strip around a tire building drum, tire or core.

"Radial" and "radially" mean directions radially toward or away from the axis of rotation of the tire.

"Tread Arc Width" means the arc length of the tread as measured between the radially outermost lateral edges of the tread.

### Brief Description of the Drawings

The invention will be described by way of example and with reference to the accompanying drawings in which:
FIG. 1 illustrates a partial cross-section through the tire midplane of an exemplary radial tire 10 of a comparative example;
FIG. 2 illustrates a cross-sectional view of the tire belt package of a comparative example;
FIG. 3 illustrates a top view of a comparative example of a belt layup shown on a tire building drum from 0 to 360 degrees of the drum shown;
FIG. 4 illustrates a top view of a comparative example of a belt layup shown on a tire building drum from 0 to 360 degrees of the drum shown;
FIG. 5 is a cross-sectional view of a comparative example tire belt package illustrating the formation of the low angle belt; and
FIG. 6 is an embodiment of a belt package for a radial tire in accordance with the invention.

### Detailed Description of Example Embodiments the Invention

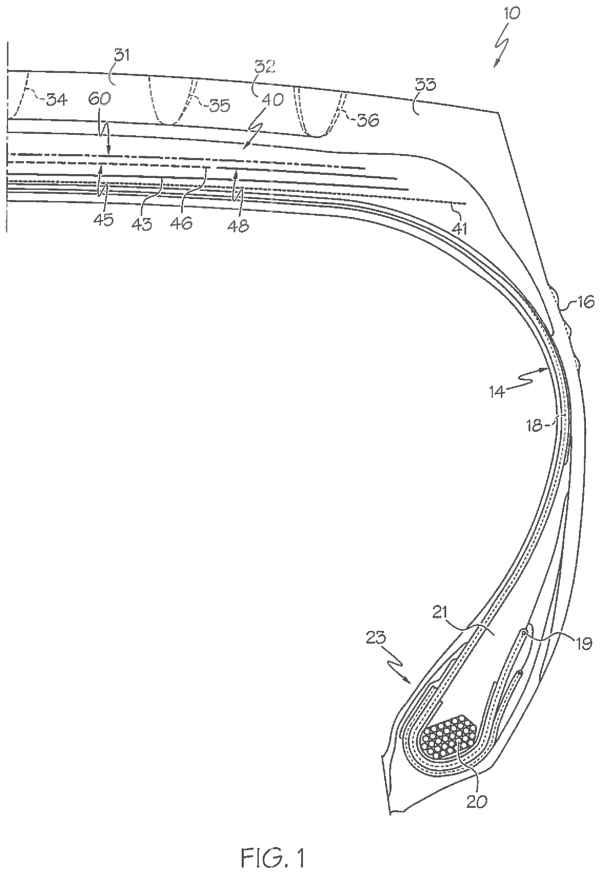

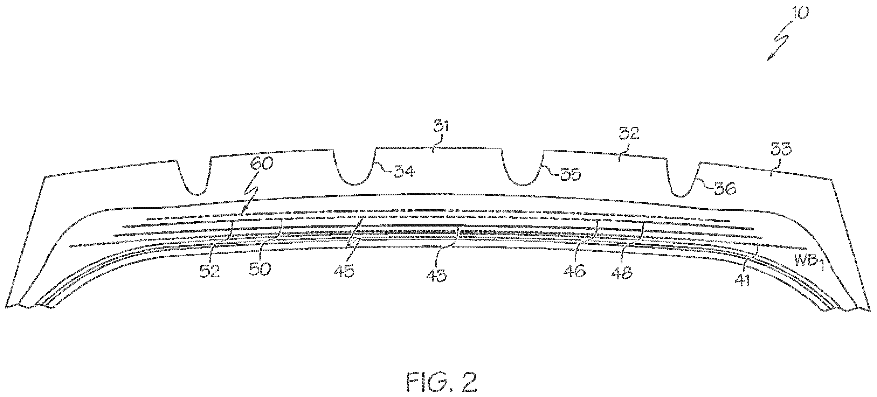

FIGS. 1-2 illustrates a partial cross-section of an exemplary radial tire 10 which includes a bead portion 23 having a bead core 20 embedded therein and an optional bead apex 21, a sidewall portion 16 extending radially outward from the bead portion 23, and a cylindrical tread portion extending between radially outer ends of the sidewall portions 16. The tread may include a plurality of ribs 31, 32 and shoulder lugs 33 with optional grooves 34, 35, 36 located between the ribs. The tire 10 preferably includes an inner liner 14 and is reinforced by one or more carcass plies 18 toroidally extending from one bead portion 23 to the other bead portion (not shown). The carcass ply 18 is preferably anchored to the bead core and for example, may wind around each bead core 20 from inside of the tire 10 away from the equatorial plane EP to form a turnup portion 19. A belt reinforcement package 40 is arranged between the carcass ply 18 and the tread portion.

The belt reinforcement package 40 includes a first and second working belt 41, 45. The first working belt 41 is preferably the radially innermost belt of the belt reinforcement package 40 and is the widest belt of the belt reinforcement package 40. Preferably, the first working belt 41 has a belt width substantially equal to the tread arc width. The breaker angle of first working belt 41 is between 12 and 45 degrees, preferably with a left orientation, more preferably in the range of 19 to 30 degrees. The belt angles are measured with respect to the circumferential direction.

The second working belt 45 is located radially outward of the first working belt. The second working belt 45 preferably has a width in the range of 30% to 50% of the tread arc width. The second working belt 45 has a breaker angle between 12 and 45 degrees, preferably with a right orientation, more preferably in the range of 19 to 30 degrees. The second working belt 45 is preferably made of the same wire as belt 41 and has the same construction with the same but opposite angular orientation as 41.

The first and second working belts 41, 45 are preferably made of steel. The % elongation at 10% of breaking load of the first and second working belts 41,45 preferably range from 0.18 to 0.26.

Preferably, the working belts 41, 45 are extensible, so that the % elongation at 10% of breaking load is greater than 0.2. The % elongation is measured on a cord extracted from a vulcanized tire.

The belt package 40 further includes a relatively low angle belt 43, that is helically wound and has a belt angle of less than 10 degrees, and more preferably less than 5 degrees such as 1 degree or about 0 degree.

The low angle belt 43 is preferably located between the first and second working belts, in other words, radially outward of the first working belt 41, and radially inward of the second working belt 45.

The low angle belt 43 is preferably narrower in axial width than the first working belt 41.

The low angle belt 43 is preferably formed from a reinforced strip of one or more cords, wherein the width of the strip is preferably in the range of from 3 to 20 mm, and more preferably in the range of from 3 to 8 mm. The low angle belt structure 43 may be formed from using any of the patterns as further described below.

The second working belt 45 is located radially outward of the low angle belt 43 and has a first lateral end 46 that is located adjacent a first lateral end belt 48. The second working belt 45 has a second lateral end 50 that is located adjacent a second lateral end belt 52.

The first and second lateral end belts 48, 52 preferably each have a belt angle of less than 10 degrees, and more preferably less than 5 degrees.

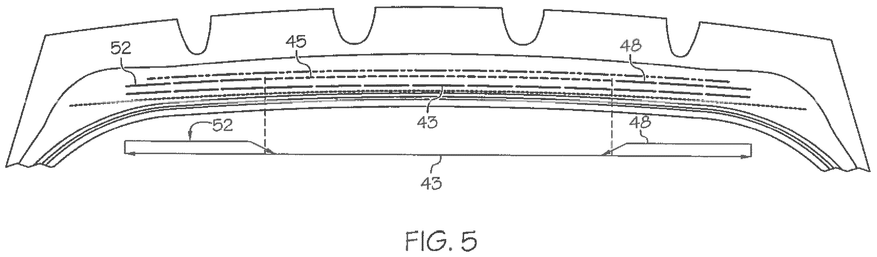

FIG. 5 illustrates an alternate example, wherein the lateral belt 48 and 52 are integrally formed with the low angle belt 43, as illustrated.

The belt structure 40 further comprises a third working belt 60 which is the radially outermost belt. The third working belt preferably has a breaker angle between 12 and 45 degrees, preferably with a right orientation, more preferably in the range of 19 to 30 degrees. The third working belt 60 is preferably made of the same wire as working belt 41 and has the same construction with the same but opposite angular orientation as 41.

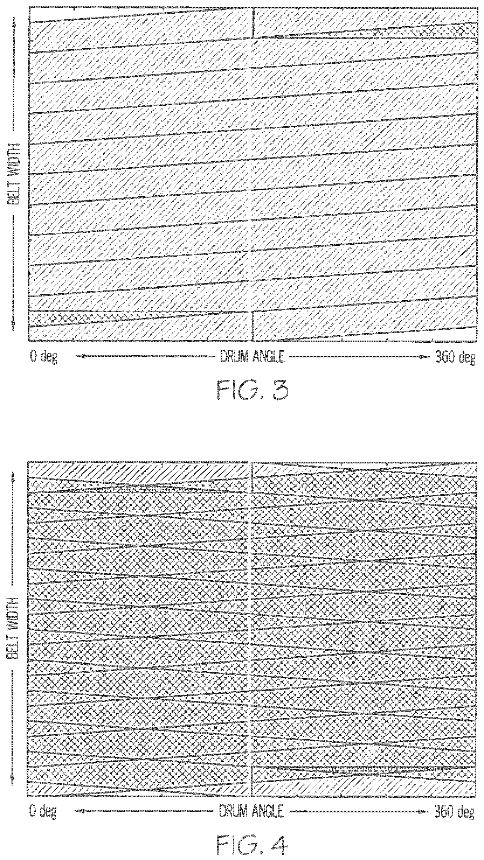

A first example of a belt layup for the relatively low angle belt 43 is shown in FIG. 3. This pattern spirally winds a rubberized strip of one or more parallel cords on a tire building drum or former. Preferably, the strip uses at least three reinforcement cords, and preferably has a strip width of 3 to 30 mm, and more particularly 5 to 7 mm. The low angle belt is preferably formed by starting the strip at a first drum end or left shoulder of the tire building drum at a zero degree angle with the circumferential direction, wherein the strip laterally shifts over one strip width after 360 degrees rotation of the drum. The strip is then wound on the drum as the drum rotates to the opposite shoulder or side of the drum. The strips may be wound with a gap between windings or overlapped. The strip may be wound in such a manner to form a single or double layer forming a low angle belt.

A second example of the relatively low angle belt 43 construction is shown in FIG. 4. Starting at the center line of the drum, a strip of reinforcement cords is wrapped onto the building drum to the right shoulder of the drum at a first angle, wherein the first angle is less than 10 degrees with the circumferential direction. The strip is then continuously wound in a zigzag manner from the first shoulder to the second shoulder of the drum at a second angle, wherein the second angle is negative and less than 10 degrees with the circumferential direction, and then back to the center. A positive gap or spacing may be placed in between consecutive adjacent segments of the strip, acting like a separator.

The belt width of the relatively low angle belt is preferably in the range of from 70% to 80% of the tread arc width, and even more preferably in the range of from 73 to 77 %.

The relatively low angle belt 43 is preferably reinforced with steel. Preferably it is formed or reinforced of high elongation reinforcements or extensible reinforcements.

The reinforcements may be a high elongation construction such as, for example, 3x 7x 0.22 HE.

Preferably, the relatively low angle belt 43 has 14 ends or from 12 to 20 ends per 2.54 cm (EPI).

The high elongation wire preferably has a % elongation at 10% of the breaking load ranging from 1.7- 2.05 % for a bare, green cord. The high elongation wire preferably has a % elongation at 10% of the breaking load ranging from 0.45 - 0.68 % taken from cured tire. Another example of a cord construction suitable for the invention is made of steel having a 4x7x0.26 HE construction, with an EPI of 18.

The aspect ratio of the tires described above may vary. The aspect ratio is preferably in the range of from 50 to 90.

The tires described above preferably have a net to gross ratio in the range of from 0.70 to 0.90, more preferably in the range of from 0.74 to 0.86 or from 0.78 to 0.84.

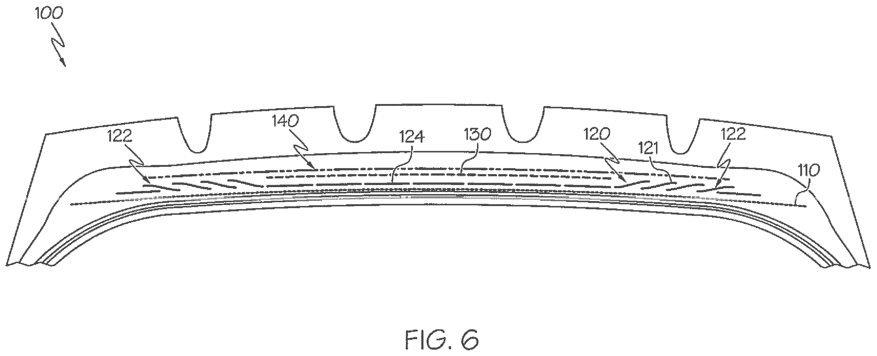

FIG. 6 illustrates an embodiment of the tire of the present invention. The tire 100 has a radially inner first working belt 110 which is the widest belt of the belt package and has a width equal to the tread arc width. A low angle belt layer 120 is located radially outward of the first working belt 110. The low angle belt layer 120 is formed from a rubberized strip 121 of parallel reinforcement cords and has a strip width in the range of 5 mm to 20 mm, more preferably 10 mm to 15 mm. The low angle belt layer 120 has overlapping strips in the axially outer ends 122 of the belt, and a central portion 124 with non-overlapping strips. A second working belt 130 is located radially outward of the low angle belt layer 120 and is the narrowest belt of the belt package. Preferably, the second working belt 130 has an axial belt width equal to the axial width of the central portion 124 of the low angle belt layer 120. The tire 100 may further include an optional third working belt 140. The third working belt 140 is wider than the second working belt, and narrower than the first working belt 110 and narrower than the low angle belt 120.

## Claims

1. A pneumatic tire, preferably a pneumatic truck tire, comprising a tread, a carcass (18) and a belt package (40) interposed between the carcass (18) and the tread, wherein the belt package (40) includes a first working belt (41, 110), wherein the first working belt (41, 110) is the radially innermost belt and is the axially widest belt of the belt package (40), wherein the belt package (40) further includes a relatively low angle belt (43, 120) located radially outward of the first working belt (41, 110) and comprising parallel reinforcement elements angled at an angle of less than 10 degrees with respect to the circumferential direction of the tire (10, 100), wherein the relatively low angle belt (43, 120) is formed of a spirally wound strip comprising reinforcement cords, and wherein the relatively low angle belt (43, 120) is formed of a central portion (124) wherein the strips comprising the reinforcement cords are not overlapped, and an axially outer portion (122), preferably on each axially outer side of the central portion (120), wherein the strips comprising the reinforcement cords are overlapped, **characterized in that** (i) the reinforcement elements of the relatively low angle belt (43, 120) and of the first working belt (41, 110) are extensible, namely that they have a relative elongation at break of greater than 0.2% at 10% of the breaking load when measured from a cord extracted from a cured tire, and that the tire (10) includes a radially outer further working belt (140); and/or **in that** (ii) the belt package (40) further includes a second working belt (45, 130) that is located radially outward of the relatively low angle belt (43, 120), the second working belt (45, 130) having a first lateral end section (46) and a second lateral end section (50), and that the tire (10) includes a radially outer further working belt (140).

2. The pneumatic tire of claim 1 wherein the belt package (40) has the feature of option (ii) of claim 1 and wherein the axial belt width of the second working belt (45, 130) belt is equal to or in a range of from 95% to 105% of the axial width of the central portion (124) of the relatively low angle belt (43, 120).

3. The pneumatic tire of claim 1 wherein the further working belt (140) is the radially outermost belt of the belt package (40).

4. The pneumatic tire of at least one of the previous claims wherein, in case of option (ii) of claim 1, the second working belt (45, 130) is formed of or comprises reinforcements that are extensible, namely that they have a relative elongation at break of greater than 0.2% at 10% of the breaking load when measured from a cord extracted from a cured tire.

## Patentansprüche

1. Luftreifen, vorzugsweise Lkw-Luftreifen, der eine Lauffläche, eine Karkasse (18) und ein zwischen der Karkasse (18) und der Lauffläche angeordnetes Gürtelpaket (40) umfasst, wobei das Gürtelpaket (40) einen ersten Arbeitsgürtel (41, 110) aufweist, wobei der erste Arbeitsgürtel (41, 110) der radial innerste Gürtel und der axial breiteste Gürtel des Gürtelpakets (40) ist, wobei das Gürtelpaket (40) ferner einen relativ niedrig abgewinkelten Gürtel (43, 120) enthält, der radial außerhalb des ersten Arbeitsgürtels (41, 110) angebracht ist, und der parallele Verstärkungselemente umfasst, die gegenüber der Umfangsrichtung des Reifens (10, 100) unter einem Winkel von weniger als 10 Grad abgewinkelt sind, wobei der relativ niedrig abgewinkelte Gürtel (43, 120) aus einem spiralförmig gewickelten Streifen besteht, der Verstärkungskorde umfasst; und wobei der relativ niedrig abgewinkelte Gürtel (43, 120) aus einem mittleren Abschnitt (124), in dem die Streifen, welche die Verstärkungskorde umfassen, sich nicht überlappen, und einem in der axialen Richtung äußeren Abschnitt (122), vorzugsweise auf jeder äußeren Seite in der axialen Richtung des mittleren Abschnitts (120), besteht, in dem die Streifen, welche die Verstärkungskorde umfassen, sich überlappen; **dadurch gekennzeichnet, dass** (i) die Verstärkungselemente des relativ niedrig abgewinkelten Gürtels (43, 120) und des ersten Arbeitsgürtels (41, 110) dehnbar sind, genauer gesagt, dass sie eine relative Bruchdehnung aufweisen, die einen Wert von mehr als 0,2 % bis 10 % der Bruchlast darstellt, wenn sie an einem Kord gemessen wird, der aus einem vulkanisierten Reifen extrahiert worden ist; und dass der Reifen (10) einen zusätzlichen, in der radialen Richtung äußeren Arbeitsgürtel (140) enthält; und/oder dass (ii) das Reifenpaket (40) ferner einen zweiten Arbeitsgürtel (45, 130) umfasst, der in radialer Richtung außerhalb des relativ niedrig abgewinkelten Gürtels (43, 120) angebracht ist; wobei der zweite Arbeitsgürtel (45, 130) eine erste seitliche Endstrecke (46) und eine zweite seitliche Endstrecke (50) aufweist, und dass der Reifen (10) einen zusätzlichen Arbeitsgürtel (140) aufweist, der in der radialen Richtung außen liegt.

2. Luftreifen nach Anspruch 1, wobei das Gürtelpaket (40) das Merkmal der Option (ii) von Anspruch 1 aufweist; und wobei die axiale Gürtelbreite des zweiten Arbeitsgürtels (45, 130) gleich der axialen Breite des mittleren Abschnitts (124) des relativ niedrig abgewinkelten Gürtels (43, 120) ist, oder in dem Bereich liegt, der 95 % bis 105 % derjenigen des genannten Abschnitts (124) beträgt.

3. Luftreifen nach Anspruch 1, wobei der zusätzliche Arbeitsgürtel (140) den Gürtel des Gürtelpakets (40) darstellt, der in der radialen Richtung am weitesten außen positioniert ist.

4. Luftreifen nach zumindest einem der vorhergehenden Ansprüche, wobei in dem Fall von Option (ii) von Anspruch 1 der zweite Arbeitsgürtel (45, 130) aus Verstärkungen besteht oder Verstärkungen umfasst, die dehnbar sind, genauer gesagt, die eine relative Bruchdehnung aufweisen, die einen Wert von mehr als 0,2 % bis 10 % der Bruchlast darstellt, wenn sie an einem Kord gemessen wird, der aus einem vulkanisierten Reifen extrahiert worden ist.

## Revendications

1. Bandage pneumatique, de préférence un bandage pneumatique destiné à un camion, qui comprend une bande de roulement, une carcasse (18) et un paquet de ceintures (40) intercalées entre la carcasse (18) et la bande de roulement ; dans lequel le paquet de ceintures (40) englobe une première ceinture de travail (41, 110) ; dans lequel la première ceinture de travail (41, 110) représente la ceinture du paquet de ceintures (40) qui est la plus interne dans la direction radiale et la plus large dans la direction axiale ; dans lequel le paquet de ceintures (40) englobe également une ceinture formant un angle d'inclinaison (43, 120) relativement faible, qui est disposée dans la direction radiale à l'extérieur de la première ceinture de travail (41, 110) et qui comprend des éléments de renforcement parallèles qui forment des angles inférieurs à 10 degrés par rapport à la direction circonférentielle du bandage pneumatique (10, 100) ; dans lequel la ceinture formant un angle d'inclinaison (43, 120) relativement faible est constituée d'une bande enroulée en spirale qui comprend des câblés de renforcement ; et dans lequel la ceinture formant un angle d'inclinaison (43, 120) relativement faible est constituée d'une portion centrale (124) dans laquelle les bandes qui comprennent les câblés de renforcement ne se chevauchent pas et d'une portion disposée à l'extérieur (122) dans la direction axiale, de préférence sur chaque côté externe, dans la direction axiale, de la portion centrale (120), dans laquelle les bandes qui comprennent les câblés de renforcement se chevauchent ; **caractérisé en ce que** (i) les éléments de renforcement de la ceinture formant un angle d'inclinaison (43, 120) relativement faible et de la première ceinture de travail (41, 110) sont extensibles, plus précisément **en ce qu'**ils possèdent un allongement relatif à la rupture qui représente une valeur de plus de 0,2 % à 10 % de la charge de rupture, lorsqu'on le mesure à partir d'un câblé qui a été extrait d'un bandage vulcanisé, et **en ce que** le bandage (10) englobe une ceinture de travail supplémentaire (140), disposée à l'extérieur dans la direction radiale ; et/ou **en ce que** (ii) le paquet de ceintures (40) englobe en outre une deuxième ceinture de travail (45, 130) qui est disposée à l'extérieur, dans la direction radiale, de la ceinture formant un angle d'inclinaison (43, 120) relativement faible ; dans lequel la deuxième ceinture de travail (45, 130) possède un premier tronçon terminal latéral (46) et deuxième tronçon terminal latéral (50), et **en ce que** le bandage (10) englobe une ceinture de travail supplémentaire (140), disposée à l'extérieur dans la direction radiale.

2. Bandage pneumatique selon la revendication 1, dans lequel le paquet de ceintures (40) possède la caractéristique de l'option (ii) de la revendication 1 ; et dans lequel la largeur de ceinture axiale de la deuxième ceinture de travail (45, 130) est égale à la largeur axiale de la portion centrale (124) de la ceinture formant un angle d'inclinaison (43, 120) relativement faible ou se situe dans une plage qui représente de 95 % à 105 % de celle de ladite portion (124).

3. Bandage pneumatique selon la revendication 1, dans lequel la ceinture de travail supplémentaire (140) représente la ceinture du paquet de ceintures (40), qui est disposée le plus à l'extérieur, dans la direction radiale.

4. Bandage pneumatique selon au moins une des revendications précédentes, dans lequel, dans le cas de l'option (ii) de la revendication 1, la deuxième ceinture de travail (45, 130) est constituée par ou comprend des renforcements qui sont extensibles, plus précisément qui possèdent un allongement relatif à la rupture qui représente une valeur de plus de 0,2 % à 10 % de la charge de rupture, lorsqu'on le mesure à partir d'un câblé qui a été extrait d'un bandage vulcanisé.
